# EUROPÄISCHE PATENTSCHRIFT

(11) **EP 4 157 696 B1**
(45) Veröffentlichungstag und Bekanntmachung des Hinweises auf die Patenterteilung: **31.12.2025**
(21) Anmeldenummer: 22741768.0
(22) Anmeldetag: 12.07.2022
(51) Int. Cl.: B62D 25/08, B60R 5/02, E05D 15/58

(54) **VORDERWAGEN FÜR EINEN PERSONENKRAFTWAGEN**
FRONT SECTION FOR A PASSENGER VEHICLE
SECTION AVANT POUR UN VÉHICULE DE TOURISME

(30) Priorität: 17.08.2021 DE 102021004205
(43) Veröffentlichungstag der Anmeldung: 05.04.2023
(73) Patentinhaber: Mercedes-Benz Group AG, 70372 Stuttgart (DE)
(72) Erfinder: MANGOLD, Patrick, 73268 Erkenbrechtsweiler (DE); HUEBNER, Alexander, 71560 Sulzbach (DE); LANDNER, Emanuel, 71034 Böblingen (DE); HEID, Klaus, 71063 Sindelfingen (DE)
(74) Vertreter: Novagraaf Group
(86) Internationale Anmeldenummer: PCT/EP2022/069442
(87) Internationale Veröffentlichungsnummer: WO 2023/020749

(56) Entgegenhaltungen:
- FR-A1- 2 821 110
- US-A- 3 010 760
- US-B2- 10 730 441

## Beschreibung

Die Erfindung betrifft einen Vorderwagen für einen Personenkraftwagen gemäß dem Oberbegriff des Anspruchs 1.

Die US 10 676 137 B2 offenbart ein Kraftfahrzeug mit einer Karosserie mit Bodenelementen, die entlang einer Basis der Karosserie positioniert sind und sich von einem vorderen Ende des Kraftfahrzeugs zu einem hinteren Ende des Kraftfahrzeugs entlang eines ununterbrochenen Weges erstrecken. Der US 10 730 441 B2 ist ein Fahrzeug als bekannt zu entnehmen, mit einer Karosseriestruktur, die einen vorderen Kofferraum mit einer vorderen Öffnung definiert. Ein Kühlergrill umschließt die vordere Öffnung in einer geschlossenen Position und ist um ein vertikales Scharnier oder ein horizontales Scharnier entlang einer Oberkante schwenkbar. Aus der DE 10 2008 039 972 A1 ist eine Frontstruktur eines Kraftfahrzeugs bekannt. Die DE 102 58 626 B4 offenbart ein Kraftfahrzeug, mit einer Kühlerverkleidung, die um eine horizontale, quer zur Fahrzeuglängsachse verlaufende und an oder in einem unteren Bereich der Kühlerverkleidung angeordnete Schwenkachse verschwenkbar an einer Fahrzeugkarosserie gelagert ist. Außerdem ist der WO 2016/177440 A1 ein Personenkraftwagen als bekannt zu entnehmen, mit einem wenigstens ein Querträgerelement und wenigstens zwei seitliche, über das Querträgerelement miteinander verbundene und sich in Fahrzeughochrichtung nach unten von dem Querträgerelement weg erstreckende, vordere Strebenelemente aufweisenden Frontendträger. Die US 3 010 760 A offenbart eine versenkbare Heckklappe für ein Fahrzeug. Die FR 2 821 110 A1 offenbart ein hinteres Schließsystem für ein Fahrzeug.

Aufgabe der vorliegenden Erfindung ist es, einen Vorderwagen für einen Personenkraftwagen sowie einen Personenkraftwagen mit einem solchen Vorderwagen zu schaffen, sodass eine besonders vorteilhafte Nutzbarkeit realisiert werden kann.

Diese Aufgabe wird erfindungsgemäß durch einen Vorderwagen mit den Merkmalen des Anspruchs 1 sowie durch einen Personenkraftwagen mit den Merkmalen des Anspruchs 9 gelöst. Vorteilhafte Ausgestaltungen mit zweckmäßigen Weiterbildungen der Erfindung sind Gegenstand der abhängigen Ansprüche.

Ein erster Aspekt der Erfindung betrifft einen Vorderwagen für einen Personenkraftwagen. Der Vorderwagen umfasst wenigstens ein frontseitiges Verkleidungselement, welches zwischen einer Verkleidungsstellung und wenigstens einer Verstaustellung verlagerbar ist. In der Verkleidungsstellung ist ein sich in Fahrzeuglängsrichtung nach hinten an das Verkleidungselement anschließender Vorderwagenbereich des Vorderwagens in Fahrzeuglängsrichtung nach vorne hin, insbesondere direkt, durch das Verkleidungselement überdeckt, das heißt überlappt. Ist somit beispielsweise ein Gegenstand wie beispielsweise ein Transportgegenstand in dem Vorderwagenbereich angeordnet, wenn sich das Verkleidungselement in der Verkleidungsstellung befindet, so ist der Gegenstand in Fahrzeuglängsrichtung nach vorne hin, insbesondere direkt, durch das Verkleidungselement überlappt und somit überdeckt. In der Verstaustellung gibt das Verkleidungselement zumindest den Vorderwagenbereich in Fahrzeuglängsrichtung nach vorne hin frei, sodass in der Verstaustellung des Verkleidungselements der Vorderwagenbereich in Fahrzeuglängsrichtung nach vorne hin nicht mehr durch das Verkleidungselement überdeckt ist. Zumindest in der Verkleidungsstellung weist das Verkleidungselement einen in Fahrzeughochrichtung unteren Randbereich auf, an dem beispielsweise das Verkleidungselement in der Verkleidungsstellung in Fahrzeughochrichtung nach unten hin endet. Mit anderen Worten ist der Randbereich zumindest in der Verkleidungsstellung ein in Fahrzeughochrichtung unterer Randbereich, insbesondere der in Fahrzeughochrichtung unterste Randbereich, des Verkleidungselements. Das Verkleidungselement weist ferner einen sich, insbesondere direkt, an den Randbereich anschließenden Verkleidungsbereich auf, welcher sich zumindest in der Verkleidungsstellung in Fahrzeughochrichtung nach oben hin, insbesondere direkt, an den unteren Randbereich anschließt. Insbesondere ist es denkbar, dass das Verkleidungselement relativ zu wenigstens einem Bauelement, insbesondere relativ zu wenigstens einem Strukturelement, des Vorderwagens zwischen der Verkleidungsstellung und der Verstaustellung verlagerbar, das heißt bewegbar, ist. Dabei kann beispielsweise vorgesehen sein, dass das Verkleidungselement zwischen der Verstaustellung und der Verkleidungsstellung verlagerbar an dem Bauelement, insbesondere an dem Strukturelement, gehalten ist.

Um nun eine besonders vorteilhafte Nutzbarkeit des Vorderwagens und somit des Personenkraftwagens insgesamt realisieren zu können, ist es erfindungsgemäß vorgesehen, dass das Verkleidungselement derart aus der Verkleidungsstellung in die, insbesondere gegenüber der Verkleidungsstellung tiefer liegende, Verstaustellung verlagerbar ist, dass unter Verschwenken zumindest des Verkleidungsbereichs in Fahrzeuglängsrichtung nach vorne und in Fahrzeughochrichtung nach unten der untere Randbereich in Fahrzeuglängsrichtung nach hinten hin in einen korrespondierenden Aufnahmeraum einfahrbar ist. Mit anderen Worten, um das Verkleidungselement aus der Verkleidungsstellung in die Verstaustellung zu verlagern, wird das Verkleidungselement, insbesondere um eine in Fahrzeugquerrichtung verlaufende Schwenkachse sowie vorzugsweise relativ zu dem Bauelement, verschwenkt, derart, dass der Verkleidungsbereich in Fahrzeuglängsrichtung nach vorne und in Fahrzeughochrichtung nach unten geschwenkt wird, und der in der Verkleidungsstellung untere Randbereich wird, insbesondere im Vergleich zur Verstaustellung, in Fahrzeuglängsrichtung nach hinten in den Aufnahmeraum eingefahren, insbesondere relativ zu dem Bauelement. Dabei ist es denkbar, dass zunächst oder zuerst der Verkleidungsbereich in Fahrzeuglängsrichtung nach vorne und in Fahrzeughochrichtung nach unten geschwenkt und daraufhin das Verkleidungselement, insbesondere translatorisch, in Fahrzeuglängsrichtung nach hinten bewegt wird, sodass der Randbereich in Fahrzeuglängsrichtung nach hinten hin in den Aufnahmeraum eingefahren wird, oder das Verschwenken des Verkleidungsbereichs und das Einfahren des unteren Randbereichs in den Aufnahmeraum erfolgen zumindest teilweise gleichzeitig.

Unter dem Einfahren des unteren Randbereichs in Fahrzeuglängsrichtung nach hinten in den Aufnahmeraum ist insbesondere zu verstehen, dass das Verkleidungselement, insbesondere insgesamt, in Fahrzeuglängsrichtung nach hinten bewegt wird, insbesondere relativ zu dem Bauelement, wodurch der untere Randbereich in den Aufnahmeraum eingefahren wird. Hierdurch gibt das Verkleidungselement in der Verstaustellung, in welcher das Verkleidungselement vorteilhaft verstaut ist, den Vorderwagenbereich derart besonders vorteilhaft frei, dass der Vorderwagenbereich nicht nur in Fahrzeuglängsrichtung nach vorne hin freigegeben ist, sondern das Verkleidungselement steht in der Verstaustellung auch nicht übermäßig weit in Fahrzeuglängsrichtung nach vorne hin von dem Vorderwagenbereich ab beziehungsweise das sich in der Verstaustellung befindende Verkleidungselement überragt in der Verstaustellung den Vorderwagenbereich nicht oder nicht übermäßig weit in Fahrzeuglängsrichtung nach vorne hin. Hierdurch ist - wenn sich das Verkleidungselement in der Verstaustellung befindet - eine besonders vorteilhafte Zugänglichkeit zu dem Vorderwagenbereich für eine vor dem Personenkraftwagen, das heißt vor dessen Front, stehende Person geschaffen, da sich die Person besonders nahe an den Vorderwagenbereich stellen kann. Um dann den Vorderwagenbereich zu erreichen, muss sich die Person nicht umständlich beugen oder bücken, denn das sich in der Verstaustellung befindende Verkleidungselement befindet sich nicht in einem Bauch- oder Beinbereich der Person. Somit kann die Person den Vorderwagenbereich besonders gut erreichen, ohne durch das Verkleidungselement behindert zu werden, das heißt insbesondere ohne, dass das Verkleidungselement die Beine und/oder den Bauch der Person berührt.

Um eine besonders vorteilhafte Zugänglichkeit zu dem Vorderwagenbereich sowie eine besonders vorteilhafte Steifigkeit des Vorderwagens realisieren zu können, ist erfindungsgemäß ein oberes Querträgerelement vorgesehen, welches zwischen einer Abstützstellung und wenigstens einer Zugangsstellung, insbesondere relativ zu dem genannten Bauelement des Vorderwagens, verlagerbar ist. In der Abstützstellung ist zumindest ein Teil des Vorderwagenbereiches in Fahrzeuglängsrichtung nach vorne hin, insbesondere direkt, durch das Querträgerelement überdeckt und somit überlappt. Außerdem ist in der Abstützstellung das Querträgerelement in Fahrzeuglängsrichtung nach hinten hin durch eine Rohbaustruktur des Personenkraftwagens überdeckt, sodass in der Abstützstellung das Querträgerelement insbesondere bei einer unfallbedingten Kraftbeaufschlagung in Fahrzeuglängsrichtung nach hinten hin an der Rohbaustruktur abstützbar oder abgestützt ist. Unter der Rohbaustruktur ist zumindest ein Bereich des auch als Karosserie bezeichneten und vorzugsweise als selbsttragende Karosserie ausgebildeten Rohbaus des Personenkraftwagens zu verstehen. Dadurch, dass das Querträgerelement in der Abstützstellung in Fahrzeuglängsrichtung nach hinten hin durch die Rohbaustruktur überlappt ist, können beispielsweise bei einem Frontalaufprall unfallbedingte Lasten besonders vorteilhaft durch das Querträgerelement aufgenommen und von dem Querträgerelement an die dahinterliegende Rohbaustruktur übertragen werden, sodass ein besonders vorteilhaftes Unfallverhalten darstellbar ist.

In der Zugangsstellung gibt das Querträgerelement zumindest den genannten Teil des Vorderwagenbereichs in Fahrzeuglängsrichtung nach vorne hin frei, sodass in der Zugangsstellung zumindest der Teil des Vorderwagenbereichs in Fahrzeuglängsrichtung nach vorne hin nicht mehr durch das Querträgerelement überdeckt beziehungsweise überlappt ist. Außerdem ist das Querträgerelement in der Zugangsstellung gegenüber der Abstützstellung, das heißt im Vergleich zu der Abstützstellung, in Fahrzeughochrichtung tiefer angeordnet, wodurch der Vorderwagenbereich insbesondere für die zuvor genannte Person besonders einfach und komfortabel zugänglich ist. Insbesondere ist es vorgesehen, dass in der Zugangsstellung das Querträgerelement in Fahrzeuglängsrichtung nach hinten nicht mehr durch die Rohbaustruktur überdeckt beziehungsweise überlappt ist, insbesondere dadurch, dass das Querträgerelement in der Zugangsstellung in Fahrzeughochrichtung tiefer als die Rohbaustruktur angeordnet ist. Um somit beispielsweise eine besonders einfache und komfortable Zugänglichkeit zu dem Vorderwagenbereich zu schaffen, wird das Verkleidungselement aus der Verkleidungsstellung in die Verstaustellung verlagert, und das Querträgerelement wird aus der Abstützstellung in die Zugangsstellung verlagert. In der Folge kann die Person den Vorderwagenbereich besonders ergonomisch erreichen.

Um eine besonders komfortable und ergonomische Zugänglichkeit zu dem Vorderwagenbereich zu schaffen, ist es bei einer weiteren Ausführungsform der Erfindung vorgesehen, dass das Querträgerelement in der Zugangsstellung in Fahrzeuglängsrichtung nach hinten betrachtet überdeckungsfrei zu der Rohbaustruktur angeordnet, das heißt nicht durch die Rohbaustruktur beziehungsweise den Bereich überdeckt oder überlappt ist, durch die beziehungsweise den das Querträgerelement in der Abstützstellung in Fahrzeuglängsrichtung nach hinten hin überdeckt, das heißt überlappt, ist.

Um eine besonders hohe Steifigkeit des Vorderwagens sowie eine besonders gute Zugänglichkeit zu dem Vorderwagenbereich realisieren zu können, ist es in weiterer Ausgestaltung der Erfindung vorgesehen, dass die Rohbaustruktur eine obere Längsträgerebene, das heißt zumindest ein Bereich einer oberen Längsträgerebene, ist. Dabei ist es insbesondere denkbar, dass die obere Längsträgerebene wenigstens oder genau zwei in Fahrzeugquerrichtung voneinander beabstandete, obere Längsträger aufweist, die beispielsweise über das sich zumindest im Wesentlichen in Fahrzeugquerrichtung erstreckende Querträgerelement miteinander verbunden sein können. Beispielsweise ist das Querträgerelement direkt an die oberen Längsträger, insbesondere an jeweilige, vordere Enden der oberen Längsträger, angebunden. Ferner ist es denkbar, dass das Querträgerelement über jeweilige Energieabsorptionselemente an die oberen Längsträger angebunden ist. Mit anderen Worten kann vorgesehen sein, dass das Querträgerelement zumindest in der Abstützstellung über insbesondere in Fahrzeugquerrichtung voneinander beabstandete Energieabsorptionselemente in Fahrzeuglängsrichtung nach hinten an der Rohbaustruktur, insbesondere an der oberen Längsträgerebene und ganz insbesondere an den oberen Längsträgern, abstützbar oder abgestützt ist, wodurch ein besonders gutes Energieabsorptionsvermögen und somit ein besonders vorteilhaftes Unfallverhalten des Vorderwagens dargestellt werden können.

Die Energieabsorptionselemente werden auch als Energieabsorber bezeichnet und sind beispielsweise bei einer Frontalkollision unter Energieverzehrung verformbar. Dabei ist es denkbar, dass das Querträgerelement relativ zu den Energieabsorptionselementen zwischen der Abstützstellung und der Zugangsstellung verlagerbar ist. Alternativ ist es denkbar, dass die Energieabsorptionselemente mit dem Querträgerelement zwischen der Abstützstellung und der Zugangsstellung mitverlagerbar, mithin mitbewegbar sind. Dabei sind beispielsweise die Energieabsorptionselemente in das Querträgerelement integriert. Die Energieabsorptionselemente bilden beispielsweise eine sogenannte Crashstruktur, die mit dem oberen Querträgerelement mitverlagerbar und dabei beispielsweise in das obere Querträgerelement integriert sein kann. Beispielsweise ist das Querträgerelement zwischen der Abstützstellung und der Zugangsstellung klappbar, insbesondere verschwenkbar, sodass beispielsweise das obere Querträgerelement eine klappbare oder wegklappbare Struktur ist. Insbesondere kann das obere Querträgerelement ein Montageträger sein, an dem beispielsweise wenigstens eine Komponente wie beispielsweise ein Kühler gehalten sein kann.

Um einerseits eine vorteilhafte Zugänglichkeit zu dem Vorderwagenbereich und andererseits gleichzeitig ein besonders vorteilhaftes Unfallverhalten des Vorderwagens und somit des Personenkraftwagens insgesamt darstellen zu können, ist es in weiterer Ausgestaltung der Erfindung vorgesehen, dass die Rohbaustruktur in Fahrzeughochrichtung oberhalb einer Hauptlängsträgerebene des Personenkraftwagens angeordnet ist, an dessen Hauptlängsträgerebene ein frontseitiger Biegequerträger angebunden ist. Die Hauptlängsträgerebene umfasst beispielsweise wenigstens oder genau zwei insbesondere in Fahrzeugquerrichtung voneinander beabstandete, weitere Längsträger, welche auch als Hauptlängsträger bezeichnet werden. Der Biegequerträger ist beispielsweise, insbesondere direkt, an die Hauptlängsträger, insbesondere an deren jeweilige, vordere Enden, angebunden, oder der frontseitige Biegequerträger ist über jeweilige, weitere Energieabsorptionselemente an die Hauptlängsträger, insbesondere an deren jeweilige, vordere Enden, angebunden.

Um die vorteilhafte Zugänglichkeit zu dem Vorderwagenbereich auf besonders einfache und kostengünstige Weise zu realisieren, ist es in weiterer Ausgestaltung der Erfindung vorgesehen, dass das Verkleidungselement und das Querträgerelement unabhängig voneinander verlagerbar sind. Dies bedeutet insbesondere, dass das Verkleidungselement, insbesondere während sich das Querträgerelement in der Abstützstellung befindet, zwischen der Verstaustellung und der Verkleidungsstellung verlagert werden kann, ohne das Querträgerelement, insbesondere aus der Abstützstellung, zu verlagern beziehungsweise während das Querträgerelement in der Abstützstellung verbleibt. Somit ist es beispielsweise denkbar, dass zunächst das Verkleidungselement aus der Verkleidungsstellung in die Verstaustellung verlagert wird, woraufhin das Querträgerelement aus der Abstützstellung in die Zugangsstellung verlagert wird. Ferner ist es beispielsweise denkbar, dass das Querträgerelement, insbesondere während sich das Verkleidungselement in der Verstaustellung befindet, zwischen der Abstützstellung und der Zugangsstellung verlagert werden kann, ohne das Verkleidungselement zu verlagern, das heißt während das Verkleidungselement in der Verstaustellung verbleibt. Somit wird beispielsweise zunächst das Querträgerelement aus der Zugangsstellung in die Abstützstellung verlagert, woraufhin das Verkleidungselement aus der Verstaustellung in die Verkleidungsstellung verlagert wird.

Um eine besonders gute Nutzbarkeit auf besonders komfortable Weise zu realisieren, ist es in weiterer Ausgestaltung der Erfindung vorgesehen, dass das Verkleidungselement und das Querträgerelement miteinander gekoppelt und dadurch gemeinsam, das heißt gleichzeitig verlagerbar sind. Somit erfolgt zumindest ein Teil der Verlagerung des Verkleidungselements zwischen der Verkleidungsstellung und der Verstaustellung gleichzeitig mit zumindest einem Teil der Verlagerung des Querträgerelements zwischen der Abstützstellung und der Zugangsstellung. Dabei ist es insbesondere denkbar, dass das Querträgerelement über das Verkleidungselement verlagerbar ist. Mit anderen Worten kann beispielsweise das Querträgerelement durch Verlagern des Verkleidungselements verlagert werden, sodass beispielsweise die zuvor genannte Person das Verkleidungselement, insbesondere manuell, verlagert, wobei mit der Verlagerung des Verkleidungselements die Verlagerung des Querträgerelements einhergeht beziehungsweise durch Verlagern des Verkleidungselements ist die Verlagerung des Querträgerelements bewirkbar. Dadurch können das Verkleidungselement und das Querträgerelement besonders komfortabel verlagert werden.

Um eine besonders gute Nutzbarkeit des Vorderwagens zu realisieren, weist der Vorderwagen bei einer weiteren Ausführungsform der Erfindung einen frontseitigen Stauraum auf, welcher auch als frontseitiger Kofferraum oder Frunk (front trunk) bezeichnet wird. Dabei ist es vorgesehen, dass der Vorderwagenbereich in Fahrzeughochrichtung zumindest über einen Teilbereich des Stauraums angeordnet ist.

Beispielsweise ist der Vorderwagenbereich zumindest ein Teil des Stauraums. Insbesondere ist denkbar, dass der Vorderwagenbereich der Stauraum ist, oder der Vorderwagenbereich ist ein weiterer Teilbereich des Stauraums, wobei der weitere Teilbereich in Fahrzeughochrichtung über dem ersten Teilbereich angeordnet ist. Über den Vorderwagenbereich ist der Stauraum besonders komfortabel und ergonomisch zugänglich, sodass eine besonders gute Nutzbarkeit des Vorderwagens dargestellt werden kann.

Schließlich hat es sich als besonders vorteilhaft gezeigt, wenn der Vorderwagen eine frontseitige Klappe aufweist, welche zwischen einer Schließstellung und wenigstens einer Offenstellung, insbesondere relativ zu dem zuvor genannten Bauelement, bewegbar, insbesondere verschwenkbar, ist. In der Schließstellung deckt die frontseitige Klappe den Stauraum in Fahrzeughochrichtung nach oben hin zumindest teilweise ab. In der Offenstellung gibt die Klappe den Stauraum in Fahrzeughochrichtung nach oben hin zumindest teilweise frei.

Beispielsweise ist das zuvor genannte Bauelement die Rohbaustruktur oder der Biegequerträger. Mit anderen Worten kann beispielsweise das Verkleidungselement sowie vorzugsweise auch das Querträgerelement relativ zu der Rohbaustruktur und vorzugsweise auch relativ zu dem Biegequerträger und den Hauptlängsträgern zwischen der Verkleidungsstellung und der Verstaustellung beziehungsweise zwischen der Abstützstellung und der Zugangsstellung verlagert werden.

Ein zweiter Aspekt der Erfindung betrifft einen Personenkraftwagen, mit einem Vorderwagen gemäß dem ersten Aspekt der Erfindung. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Vorzugsweise ist der Personenkraftwagen als Elektrofahrzeug, insbesondere als batterieelektrisches Fahrzeug (BEV), ausgebildet. Dabei weist der Personenkraftwagen wenigstens einen insbesondere frontseitigen Elektromotor auf, welcher in dem auch als Vorbau bezeichneten Vorderwagen angeordnet ist. Mittels des Elektromotors ist der Personenkraftwagen, insbesondere rein, elektrisch antreibbar. Durch Verwendung des Elektromotors insbesondere anstelle eines Verbrennungsmotors zum Antreiben des Personenkraftwagens kann der frontseitige Stauraum besonders groß ausgestaltet werden, sodass eine besonders gute Nutzbarkeit darstellbar ist. Insbesondere im Hinblick auf den frontseitigen Stauraum kann sich die Herausforderung ergeben, eine vorteilhafte Ergonomie bei einem Be- und Entladen des auch als Frontkofferraum bezeichneten, frontseitigen Stauraums zu realisieren, insbesondere derart, dass der frontseitige Stauraum besonders komfortabel und ergonomisch beladen und entladen werden kann. Der frontseitige Stauraum kann eine tiefe Mulde aufweisen oder sein, welche herkömmlicherweise und insbesondere bezogen auf das vorderste Ende des Personenkraftwagens in Fahrzeuglängsrichtung weit hinten angeordnet sein kann. In der Folge ist der frontseitige Stauraum beziehungsweise die Mulde bei herkömmlichen Lösungen nur sehr schwer zugänglich, da eine Person, die den Stauraum beladen oder entladen möchte, sich über das vorderste Ende und vordere Bauteile lehnen muss. Diese Problematik wird nochmals deutlich verschärft, wenn der Personenkraftwagen nicht etwa beispielsweise als Limousine, sondern als Geländewagen wie beispielsweise als SUV ausgebildet ist. Durch eine im Vergleich zu einer Limousine deutlich höhere Standhöhe des Personenkraftwagens und dessen Designsprache insbesondere an der Front kann die Zugänglichkeit zu dem Stauraum nochmals schlechter werden. Dieses Problem kann jedoch durch die Erfindung vermieden werden, da das Verkleidungselement und vorzugsweise auch das Querträgerelement, die die Zugänglichkeit zu dem Stauraum beeinträchtigen könnten, verlagert werden können. Dadurch kann beispielsweise eine Ladekante, welche zum Be- und Entladen des frontseitigen Stauraums zu überwinden ist, in ihrer Höhe abgesenkt beziehungsweise besonders tief angeordnet werden, sodass der frontseitige Stauraum besonders ergonomisch und komfortabel be- und entladen werden kann. Insbesondere durch Verwendung des Querträgerelements können gleichzeitig ein besonders vorteilhaftes Unfallverhalten und eine besonders vorteilhafte Steifigkeit, insbesondere Verwindungssteifigkeit, des Vorderwagens gewährleistet werden. Außerdem kann durch das Querträgerelement ermöglicht werden, unfallbedingte Lasten, beispielsweise bei einer Frontalkollision, vorteilhaft aufzunehmen und an dahinterliegende Strukturen wie beispielsweise die genannte Rohbaustruktur, insbesondere an die oberen Längsträger, abzuleiten.

Weitere Vorteile und Einzelheiten der Erfindung ergeben sich aus der nachfolgenden Beschreibung sowie anhand der Zeichnung. Dabei zeigen:
- Fig. 1: eine schematische und geschnittene Seitenansicht auf einen Vorderwagen eines Personenkraftwagens, wobei sich ein Verkleidungselement in seiner Verkleidungsstellung befindet;
- Fig. 2: eine schematische und geschnittene Seitenansicht auf den Vorderwagen, wobei sich das Verkleidungselement in seiner Verstaustellung befindet;
- Fig. 3: eine schematische Perspektivansicht auf eine Baueinheit des Vorderwagens; und
- Fig. 4: eine schematische und geschnittene Perspektivansicht auf die Baueinheit gemäß Fig. 3.

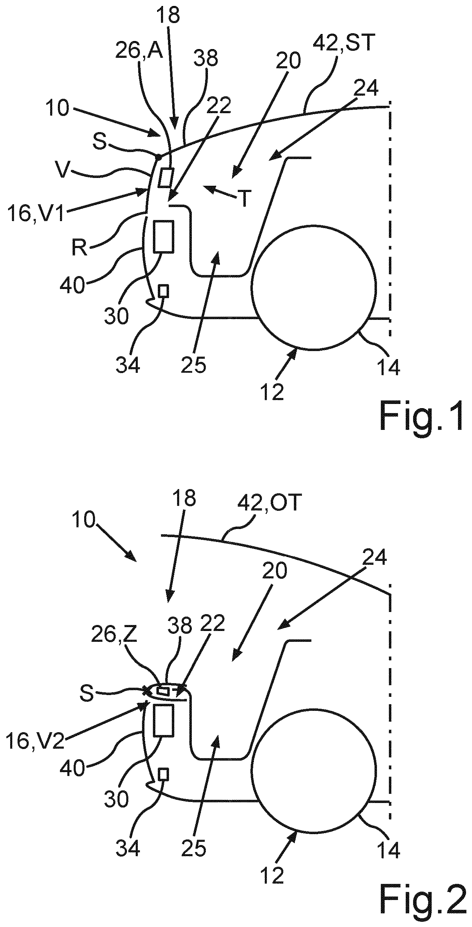

Fig. 1 zeigt in einer schematischen und geschnittenen Seitenansicht einen Vorderwagen 10 eines Personenkraftwagens. Der Personenkraftwagen weist genau zwei in Fahrzeuglängsrichtung aufeinanderfolgend angeordnete Fahrzeugachsen auf, wobei die jeweilige Fahrzeugachse genau zwei in Fahrzeugquerrichtung voneinander beabstandete, einfach auch als Räder bezeichnete Fahrzeugräder aufweist. Eine erste der Achsen ist eine Vorderachse, die in Fig. 1 teilweise erkennbar und mit 12 bezeichnet ist. Die zweite Achse ist eine in Fahrzeuglängsrichtung hinter der Vorderachse 12 angeordnete Hinterachse. In Fig. 1 ist eines der Fahrzeugräder der Vorderachse 12 erkennbar und mit 14 bezeichnet. Der Vorderwagen 10 weist wenigstens ein frontseitiges Verkleidungselement 16 auf, welches somit an der Front 18 des Personenkraftwagens beziehungsweise des Vorderwagens 10 angeordnet ist. Das Verkleidungselement 16 ist zwischen einer in Fig. 1 gezeigten Verkleidungsstellung V1 und wenigstens einer in Fig. 2 gezeigten Verstaustellung V2 verlagerbar. In der Verkleidungsstellung V1 schließt sich in Fahrzeuglängsrichtung nach hinten an das Verkleidungselement 16 ein Vorderwagenbereich 20 an, welcher in der Verkleidungsstellung V1 in Fahrzeuglängsrichtung nach vorne hin durch das Verkleidungselement 16 überdeckt und somit überlappt ist. In der Verstaustellung V2 gibt das Verkleidungselement 16 den Vorderwagenbereich 20 in Fahrzeuglängsrichtung nach vorne hin frei, sodass in der Verstaustellung V2 der Vorderwagenbereich 20 in Fahrzeuglängsrichtung nach vorne hin nicht mehr durch das Verkleidungselement 16 überdeckt beziehungsweise überlappt ist.

Das Verkleidungselement 16 weist einen Randbereich R und einen sich direkt an den Randbereich R anschließenden Verkleidungsbereich V auf, durch welchen beispielsweise in der Verkleidungsstellung V1 der Vorderwagenbereich 20 in Fahrzeuglängsrichtung nach vorne hin zumindest überwiegend, insbesondere vollständig, überdeckt ist. Bezogen auf die Verkleidungsstellung V1 ist der Randbereich R ein in Fahrzeughochrichtung unterer Randbereich R des Verkleidungselements 16, wobei sich in der Verstaustellung V1 der Verkleidungsbereich V in Fahrzeughochrichtung nach oben hin direkt an den Randbereich R anschließt.

Um nun eine besonders vorteilhafte Nutzbarkeit des Vorderwagens 10 und somit des Personenkraftwagens insgesamt realisieren zu können, ist das Verkleidungselement 16 derart aus der Verkleidungsstellung V1 in die insbesondere gegenüber der Verkleidungsstellung V1 tiefer liegende Verstaustellung V2 verlagerbar, dass unter Verschwenken zumindest des Verkleidungsbereichs V in Fahrzeuglängsrichtung nach vorne und in Fahrzeughochrichtung nach unten der untere Randbereich R in Fahrzeuglängsrichtung nach hinten in einen korrespondierenden, auch als Aufnahmebereich bezeichneten Aufnahmeraum 22 des Vorderwagens 10 einfahrbar ist. Dies bedeutet, dass - um das Verkleidungselement 16 aus der Verkleidungsstellung V1 in die Verstaustellung V2 zu bewegen - das Verkleidungselement 16 um eine in Fahrzeugquerrichtung verlaufende Schwenkachse derart verschwenkt wird, dass zumindest der Verkleidungsbereich V in Fahrzeuglängsrichtung nach vorne und in Fahrzeughochrichtung nach unten verschwenkt wird, und das Verkleidungselement 16 wird, insbesondere translatorisch, in Fahrzeuglängsrichtung nach hinten verschoben, sodass der Randbereich R in Fahrzeuglängsrichtung nach hinten in den Aufnahmeraum 22 eingefahren, das heißt insbesondere translatorisch hineinbewegt, wird. Hierdurch ist, wenn sich das Verkleidungselement 16 in der Verstaustellung V2 befindet, der Vorderwagenbereich 20 für eine vor der Front 18 des Personenkraftwagens stehende Person besonders einfach, komfortabel und ergonomisch zugänglich, da das Verkleidungselement 16 den Vorderwagenbereich 20 in Fahrzeuglängsrichtung nach vorne hin nicht oder zumindest nicht übermäßig überragt. Dies bedeutet, dass sich die Person in Fahrzeuglängsrichtung betrachtet, besonders nahe an den Vorderwagenbereich 20 stellen und beispielsweise in den Vorderwagenbereich 20 greifen kann, ohne sich übermäßig bücken oder vorbeugen zu müssen.

Bei dem in den Fig. gezeigten Ausführungsbeispiel weist der Vorderwagen 10 einen auch als Frontkofferraum bezeichneten, frontseitigen Stauraum 24 auf, welcher einen ersten Teilbereich 25 aufweist. Dabei ist der Vorderwagenbereich 20 in Fahrzeughochrichtung oberhalb des ersten Teilbereichs 25 angeordnet, wobei der Vorderwagenbereich 20 und der Teilbereich 25 miteinander verbunden sind. Bei dem in den Fig. gezeigten Ausführungsbeispiel ist der Vorderwagenbereich 20 ein zweiter Teilbereich des frontseitigen Stauraums 24, sodass der frontseitige Stauraum 24 über den Vorderwagenbereich 20 dann, wenn sich das Verkleidungselement 16 in der Verstaustellung V2 befindet, besonders einfach, ergonomisch und komfortabel zugänglich ist. Somit kann der Stauraum 24 besonders einfach, ergonomisch und komfortabel be- und entladen werden.

Üblicherweise besteht bei Fahrzeugen, insbesondere bei hohen Fahrzeugen, die in ihrem Vorbau- oder Vorderwagenbereich einen Gepäckraum wie beispielsweise den Stauraum 24 aufweisen, das Problem, dass sich beim Be- und Entladen des Gepäckraums die vor der Front 18 stehende Person weit nach vorne unten lehnen muss, da sich üblicherweise im oberen Bereich der Fahrzeugfront eine steife Querstruktur befindet. Dies ist nicht besonders komfortabel. Die steife Querträgerstruktur kann beispielsweise eine sogenannte Kühlerbrücke sowie gegebenenfalls weitere Querträgerstrukturen umfassen, wobei an der Kühlerbrücke beispielsweise ein Fronthaubenschloss angeordnet sein kann. Diese Querträgerstruktur insbesondere mit Karosserierohbauanbindung kann jedoch bei einem Unfall für ein hinreichend geringes Eindringen eines Kollisionspartners wie beispielsweise bei einem Pfahlaufprall sorgen. Ohne die Querträgerstruktur beziehungsweise ohne die Kühlerbrücke würde ein Hindernis weit in einen Freiraum zwischen Längsträger und dem Vorbaubereich eindringen können, falls keine entsprechenden Gegenmaßnahmen getroffen sind.

Bei dem auch als Vorbau bezeichneten Vorderwagen 10 ist das frontseitige Verkleidungselement 16 aus der Verkleidungsstellung V1 in die tiefer liegende Verkleidungsstellung V2 verlagerbar, derart, dass das Verkleidungselement 16 mit seinem unteren Randbereich R in Fahrzeuglängsrichtung nach hinten und somit in Richtung der Fahrgastzelle des Personenkraftwagens in den Aufnahmeraum 22 eingefahren wird. Dadurch ist in Fahrzeuglängsrichtung (x-Richtung) ein Zugang zu dem oder in den hinter dem Verkleidungselement 16 liegenden, auch als Vorbaubereich bezeichneten Vorderwagenbereich 20 gegeben. Beispielsweise ist die Verkleidungsstellung V1 eine erste Funktionsstellung des Verkleidungselements 16, welches insbesondere während eines Normalbetriebs des Personenkraftwagens in der ersten Funktionsstellung angeordnet ist. Die Verstaustellung V2 ist eine zweite Funktionsstellung, welche einen einfachen, komfortablen und ergonomischen Zugang zu dem Vorderwagenbereich 20 gewährleistet. Vorteilhaft bei dem Vorderwagen 10 ist, dass das Verkleidungselement 16 nicht einfach nur nach vorne hin weggeklappt wird, was dazu führen würde, dass die Person in Fahrzeuglängsrichtung weit von dem Vorderwagenbereich 20 weg stehen müsste, sondern das Verkleidungselement 16 wird (auch) in Fahrzeuglängsrichtung nach hinten geschoben, derart, dass der Randbereich R in den korrespondierenden Aufnahmeraum 22 hineingeschoben wird. Dadurch befindet sich das Verkleidungselement 16 in seiner Verstaustellung V2 hinreichend weit hinten, sodass die Person in Fahrzeuglängsrichtung betrachtet nahe an dem Vorderwagenbereich 20 stehen kann.

Um eine besonders vorteilhafte Steifigkeit und ein besonders vorteilhaftes Unfallverhalten realisieren zu können, weist der Vorderwagen 10 ein oberes Querträgerelement 26 auf, welches beispielsweise eine obere Querträgerstruktur ist oder Bestandteil einer solchen oberen Querträgerstruktur ist. Das obere Querträgerelement 26 ist zwischen einer in Fig. 1 gezeigten Abstützstellung A und einer in Fig. 2 gezeigten Zugangsstellung Z verlagerbar. In der Abstützstellung A ist zumindest ein Teil des Vorderwagenbereichs 20 in Fahrzeuglängsrichtung nach vorne hin durch das Querträgerelement 26 überdeckt und somit überlappt, wobei der genannte Teil des Vorderwagenbereichs 20 mit T bezeichnet ist. Außerdem ist in der Abstützstellung A das obere Querträgerelement 26 in Fahrzeuglängsrichtung nach hinten durch eine in den Fig. nicht näher dargestellte Rohbaustruktur des Personenkraftwagens überdeckt. Somit ist in der Abstützstellung A das Querträgerelement 26 in Fahrzeuglängsrichtung nach hinten hin an der Rohbaustruktur abstützbar oder abgestützt, sodass beispielsweise bei einer Frontalkollision des Personenkraftwagens unfallbedingte Lasten besonders vorteilhaft von dem oberen, sich in der Abstützstellung A befindenden Querträgerelement 26 aufgenommen und an die dahinterliegende Rohbaustruktur abgeleitet werden können. Dadurch können übermäßige Intrusionen vermieden werden. Mit anderen Worten kann sich das obere Querträgerelement 26 in der Abstützstellung A bei einer Frontalkollision an der dahinterliegenden Rohbaustruktur, welche Bestandteil einer Karosserietragstruktur oder als Karosserietragstruktur ausgebildet sein kann, abstützen und somit einen Beitrag zur Unfallsicherheit leisten. In der Zugangsstellung Z ist das obere Querträgerelement 26 gegenüber der Abstützstellung A abgesenkt, da das Querträgerelement 26 in der Zugangsstellung Z gegenüber der Abstützstellung A in Fahrzeughochrichtung tiefer angeordnet ist. Dadurch gibt das Querträgerelement 26 in der Zugangsstellung Z zumindest den Teil T in Fahrzeuglängsrichtung nach vorne hin frei, sodass in der Zugangsstellung Z der Teil T in Fahrzeuglängsrichtung nach vorne hin nicht mehr durch das Querträgerelement 26 überdeckt ist. Somit sind der Vorderwagenbereich 20 und somit der frontseitige Stauraum 24 insgesamt besonders einfach, komfortabel und ergonomisch zugänglich.

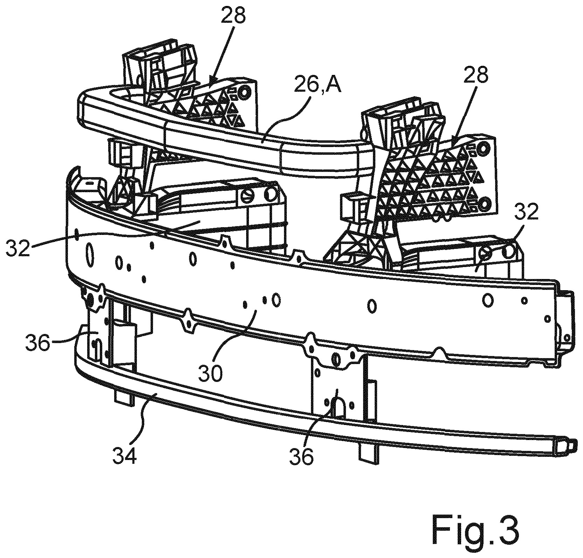

Die genannte Rohbaustruktur ist beispielsweise eine obere Längsträgerebene, welche zwei in Fahrzeugquerrichtung voneinander beabstandete, obere, erste Längsträger aufweist. Dabei ist beispielsweise je erstem Längsträger ein auch als Energieabsorber bezeichnetes Energieabsorptionselement 28 (Fig. 3) vorgesehen, wobei das Querträgerelement 26 zumindest in der Abstützstellung A über die Energieabsorptionselemente 28 in Fahrzeuglängsrichtung nach hinten hin an den ersten Längsträgern abstützbar oder abgestützt ist. Insbesondere ist es denkbar, dass das Querträgerelement 26 zumindest in der Abstützstellung A über die Energieabsorptionselemente 28 an die Rohbaustruktur, insbesondere an die ersten Längsträger, angebunden ist. Die Energieabsorptionselemente 28 sind beispielsweise bei einer Frontalkollision unter Energieverzehrung deformierbar, wodurch ein besonders vorteilhaftes Unfallverhalten dargestellt werden kann.

Der Vorderwagen 10 kann eine in Fahrzeughochrichtung unterhalb der Rohbaustruktur, insbesondere der oberen Längsträgerebene, angeordnete, weitere Längsträgerebene in Form einer Hauptlängsträgerebene aufweisen, welche auch als untere Längsträgerebene bezeichnet wird. Die Hauptlängsträgerebene weist zwei zweite Längsträger auf, welcher auch als Hauptlängsträger bezeichnet werden und in Fahrzeugquerrichtung voneinander beabstandet sind. Dabei ist an die Hauptlängsträger und somit an die Hauptlängsträgerebene ein frontseitiger Biegequerträger 30 angebunden, welcher zumindest dann, wenn sich das Querträgerelement 26 in der Abstützstellung A befindet, in Fahrzeughochrichtung weiter unten als das Querträgerelement 26 angeordnet ist. Insbesondere ist je Hauptlängsträger ein weiteres, auch als Crashbox bezeichnetes Energieabsorptionselement 32 vorgesehen. Dabei ist beispielsweise der Biegequerträger 30 über die Energieabsorptionselemente 32 an die Hauptlängsträger angebunden. Bei dem in den Fig. gezeigten Ausführungsbeispiel weist der Vorderwagen 10 ein drittes Querelement 34 auf, welches in Fahrzeughochrichtung weiter unten als der Biegequerträger 30 angeordnet ist. Das Querelement 34 ist ein sogenannter Lower Stiffener, welcher einen besonders vorteilhaften Fußgängerschutz realisieren kann. Beispielsweise dann, wenn ein Fußgänger gegen die Front 18 prallt, kann der Fußgänger insbesondere dessen Beine, mittels des Querelements 34 besonders vorteilhaft angeschoben werden, sodass eine besonders vorteilhafte Bewegung des Fußgängers bewirkt wird. Hierdurch können übermäßige Verletzungen des Fußgängers vermieden werden. Bei dem in den Fig. gezeigten Ausführungsbeispiel ist das untere Querelement 34 über auch als Vertikalstreben bezeichnete Streben 36 an den Biegequerträger 30 angebunden. Dabei erstrecken sich beispielsweise die Streben 36 in Fahrzeughochrichtung nach unten hin von dem Biegequerträger 30 weg.

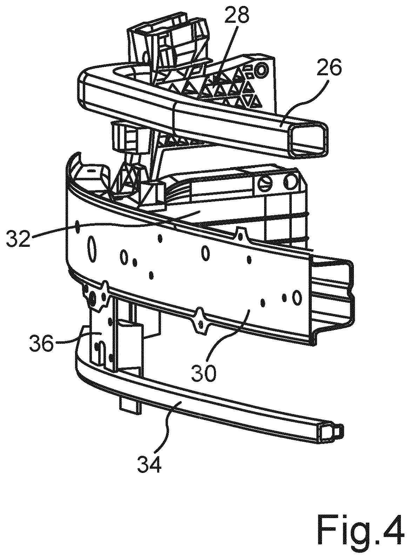

Wie aus Fig. 4 erkennbar ist, sind das obere Querträgerelement 26, der Biegequerträger 30 und das untere Querelement 34 Profile, insbesondere Hohlprofile, welche jeweils wenigstens oder genau eine oder, insbesondere im Hinblick auf das untere Querelement 34, mehrere und somit wenigstens oder genau zwei Hohlkammern aufweisen.

Es ist denkbar, dass genau ein Verkleidungselement insbesondere in Form des Verkleidungselements 16 vorgesehen ist, durch welches in dessen Verkleidungsstellung V1 der Vorderwagenbereich 20 in Fahrzeuglängsrichtung nach vorne hin überdeckt und somit überlappt ist. Bei dem in den Fig. gezeigten Ausführungsbeispiel jedoch sind das Verkleidungselement 16 und wenigstens oder genau ein zweites Verkleidungselement 38 vorgesehen, wobei die Verkleidungselemente 16 und 38 separat voneinander ausgebildet sind. Die Verkleidungselemente 16 und 38 sind gelenkig miteinander gekoppelt, insbesondere mittels eines Gelenks oder Scharniers, derart, dass das Verkleidungselement 38 mit dem Verkleidungselement 16 zwischen der Verkleidungsstellung V1 und der Verstaustellung V2 mitverlagerbar ist. Außerdem sind die Verkleidungselemente 16 und 38 bei deren Verlagerung zwischen der Verkleidungsstellung V1 und der Verstaustellung V2 relativ zueinander um eine Schwenkachse S verschwenkbar. Werden die Verkleidungselemente 16 und 38 aus der Verkleidungsstellung V1 in die Verstaustellung V2 verlagert, insbesondere zu dem Biegequerträger 30 und relativ zu der Rohbaustruktur, so werden die Verkleidungselemente 16 und 38 derart um die Schwenkachse S relativ zueinander verschwenkt, dass die Verkleidungselemente 16 und 38 aufeinander zu verschwenkt beziehungsweise aufeinandergeklappt werden. Aus Fig. 2 ist erkennbar, dass in der Verstaustellung V2 und dann, wenn sich das Querträgerelement 26 in der Zugangsstellung Z befindet, das Querträgerelement 26 in Fahrzeughochrichtung nach oben hin zumindest teilweise durch das Verkleidungselement 38 und in Fahrzeughochrichtung nach unten hin zumindest teilweise durch das Verkleidungselement 16 überdeckt ist.

Erkennbar aus Fig. 1 und 2 ist außerdem eine frontseitige Stoßfängerverkleidung 40, durch welche der Biegequerträger 30 insbesondere zumindest in Fahrzeuglängsrichtung nach vorne hin verkleidet ist. Somit wird der Biegequerträger 30 auch als Stoßfängerbiegequerträger bezeichnet.

Der Vorderwagen 10 weist außerdem eine Frontklappe 42 auf, welche, insbesondere relativ zu der Rohbaustruktur, zwischen einer in Fig. 1 gezeigten Schließstellung ST und einer in Fig. 2 gezeigten Offenstellung OT bewegbar, insbesondere um eine vorzugsweise in Fahrzeugquerrichtung verlaufende Schwenkachse, verschwenkbar ist. Beispielsweise ist an dem Querträgerelement 26 ein auch als Hauben- oder Klappenschloss bezeichnetes Schloss angeordnet, mittels welchem die Frontklappe 42 in der Schließstellung ST relativ zu dem Querträgerelement 26 zu halten ist. In der Schließstellung ST sind der Vorderwagenbereich 20 und der frontseitige Stauraum 24 jeweils zumindest teilweise durch die Frontklappe 42, welche auch als Fronthaube bezeichnet wird, in Fahrzeughochrichtung nach oben hin überdeckt. In der Offenstellung OT jedoch gibt die Frontklappe 42 den Vorderwagenbereich 20 und den frontseitigen Stauraum 24 jeweils zumindest teilweise frei, sodass dann, wenn sich die Frontklappe 42 in der Offenstellung OT, die Verkleidungselemente 16 und 38 in der Verstaustellung V2 und das obere Querträgerelement 26 in der Zugangsstellung Z befindet, der frontseitige Stauraum 24 besonders einfach, komfortabel und ergonomisch von einer vor der Front 18 des Personenkraftwagens stehenden Person be- und entladen werden kann.

## Patentansprüche

1. Vorderwagen (10) für einen Personenkraftwagen, mit wenigstens einem frontseitigen Verkleidungselement (16), welches zwischen einer Verkleidungsstellung (V1), in welcher ein sich in Fahrzeuglängsrichtung nach hinten an das Verkleidungselement (16) anschließender Vorderwagenbereich (20) in Fahrzeuglängsrichtung nach vorne hin durch das Verkleidungselement (16) überdeckt ist, und wenigstens einer zumindest den Vorderwagenbereich (20) in Fahrzeuglängsrichtung nach vorne freigebenden Verstaustellung (V2) verlagerbar ist und zumindest in der Verkleidungsstellung (V1) einen in Fahrzeughochrichtung unteren Randbereich (R) und einen sich in Fahrzeughochrichtung nach oben an den unteren Randbereich (R) anschließenden Verkleidungsbereich (V) aufweist, wobei das Verkleidungselement (16) derart aus der Verkleidungsstellung (V1) in die Verstaustellung (V2) verlagerbar ist, dass unter Verschwenken zumindest des Verkleidungsbereiches (V) in Fahrzeuglängsrichtung nach vorne und in Fahrzeughochrichtung nach unten der untere Randbereich (R) in Fahrzeuglängsrichtung nach hinten in einen korrespondierenden Aufnahmeraum (22) einfahrbar ist,
**gekennzeichnet durch**
ein oberes Querträgerelement (26), welches zwischen einer Abstützstellung (A), in welcher zumindest ein Teil (T) des Vorderwagenbereiches (20) in Fahrzeuglängsrichtung nach vorne hin durch das Querträgerelement (26) überdeckt und das Querträgerelement (26) in Fahrzeuglängsrichtung nach hinten durch eine Rohbaustruktur des Personenkraftwagens überdeckt ist, und wenigstens einer zumindest den Teil (T) in Fahrzeuglängsrichtung nach vorne freigebenden Zugangsstellung (Z) verlagerbar ist, in welcher das Querträgerelement (26) gegenüber der Abstützstellung (A) in Fahrzeughochrichtung tiefer angeordnet ist.

2. Vorderwagen (10) nach Anspruch 1,
**dadurch gekennzeichnet, dass**
das Querträgerelement (26) in der Zugangsstellung (Z) in Fahrzeuglängsrichtung nach hinten betrachtet überdeckungsfrei zu der Rohbaustruktur angeordnet ist.

3. Vorderwagen (10) nach Anspruch 1 oder 2,
**dadurch gekennzeichnet, dass**
die Rohbaustruktur eine obere Längsträgerebene ist.

4. Vorderwagen (10) nach einem der vorhergehenden Ansprüche,
**dadurch gekennzeichnet, dass**
die Rohbaustruktur in Fahrzeughochrichtung oberhalb einer Hauptlängsträgerebene des Personenkraftwagens angeordnet ist, an dessen Hauptlängsträgerebene ein frontseitiger Biegequerträger (30) angebunden ist.

5. Vorderwagen (10) nach einem der vorhergehenden Ansprüche,
**dadurch gekennzeichnet, dass**
das Verkleidungselement (16) und das Querträgerelement (26) unabhängig voneinander verlagerbar sind.

6. Vorderwagen (10) nach einem der Ansprüche 2 bis 4,
**dadurch gekennzeichnet, dass**
das Verkleidungselement (16) und das Querträgerelement (26) miteinander gekoppelt und dadurch gemeinsam verlagerbar sind.

7. Vorderwagen (10) nach einem der vorhergehenden Ansprüche,
**gekennzeichnet durch**
einen frontseitigen Stauraum (24), wobei:
- der Vorderwagenbereich (20) in Fahrzeughochrichtung zumindest über einem Teilbereich (25) des Stauraums (24) angeordnet ist; und/oder
- der Vorderwagenbereich (20) zumindest ein Teil des Stauraums (24) ist.

8. Vorderwagen (10) nach Anspruch 7,
**gekennzeichnet durch**
eine frontseitige Klappe (42), welche zwischen einer den Stauraum (24) in Fahrzeughochrichtung nach oben zumindest teilweise abdeckenden Schließstellungen (ST) und wenigstens einer den Stauraum (24) in Fahrzeughochrichtung nach oben zumindest teilweise freigebenden Offenstellung (OT) bewegbar ist.

9. Personenkraftwagen, mit einem Vorderwagen (10) nach einem der vorhergehenden Ansprüche.

## Claims

1. Front portion (10) for a passenger car, comprising at least one front paneling element (16) which is movable between a paneling position (V1), in which a front region (20) adjoining the paneling element (16) toward the rear in the longitudinal direction of the vehicle is covered by the paneling element (16) toward the front in the longitudinal direction of the vehicle, and at least one stowage position (V2) exposing at least the front region (20) toward the front in the longitudinal direction of the vehicle, and which has, at least in the paneling position (V1), a lower edge region (R) in the vertical direction of the vehicle and a paneling region (V) adjoining the lower edge region (R) upward in the vertical direction of the vehicle, the paneling element (16) being movable from the paneling position (V1) into the stowage position (V2) such that, by pivoting at least the paneling region (V) toward the front in the longitudinal direction of the vehicle and downward in the vertical direction of the vehicle, the lower edge region (R) can be inserted into a corresponding receiving space (22) rearward in the longitudinal direction of the vehicle,
**characterized by**
an upper cross-member element (26) which is movable between a support position (A), in which at least a part (T) of the front region (20) is covered toward the front in the longitudinal direction of the vehicle by the cross-member element (26), and the cross-member element (26) is covered toward the rear in the longitudinal direction of the vehicle by a body structure of the passenger car, and at least one access position (Z) which exposes at least the part (T) toward the front in the longitudinal direction of the vehicle, and in which the cross-member element (26) is arranged lower in the vertical direction of the vehicle compared to the support position (A).

2. Front portion (10) according to claim 1,
**characterized in that**
the cross-member element (26), in the access position (Z), is arranged without overlap with the body structure when viewed toward the rear in the longitudinal direction of the vehicle.

3. Front portion (10) according to claim 1 or claim 2,
**characterized in that**
the body structure is an upper longitudinal member plane.

4. Front portion (10) according to any of the preceding claims,
**characterized in that**
the body structure is arranged in the vertical direction of the vehicle above a main longitudinal member plane of the passenger car, a front flexible cross member (30) being connected to the main longitudinal member plane of said passenger car.

5. Front portion (10) according to any of the preceding claims,
**characterized in that**
the paneling element (16) and the cross-member element (26) can be moved independently of each other.

6. Front portion (10) according to any of claims 2 to 4,
**characterized in that**
the paneling element (16) and the cross-member element (26) are coupled together and can therefore be moved together.

7. Front portion (10) according to any of the preceding claims,
**characterized by**
a front stowage space (24):
- the front region (20) being arranged in the vertical direction of the vehicle at least above a partial region (25) of the stowage space (24); and/or
- the front region (20) being at least part of the stowage space (24).

8. Front portion (10) according to claim 7,
**characterized by**
a front flap (42) which is movable between a closed position (ST) which at least partially covers the stowage space (24) upwards in the vertical direction of the vehicle and at least one open position (OT) which at least partially exposes the storage space (24) upwards in the vertical direction of the vehicle.

9. Passenger car comprising a front portion (10) according to any of the preceding claims.

## Revendications

1. Face avant (10) pour une voiture de tourisme, comportant au moins un élément d'habillage (16) côté avant, lequel peut être déplacé entre une position d'habillage (V1), dans laquelle une zone de face avant (20) reliée à l'élément d'habillage (16) vers l'arrière dans le sens longitudinal du véhicule est recouverte vers l'avant dans le sens longitudinal du véhicule par l'élément d'habillage (16), et au moins une position de rangement (V2) libérant au moins la zone de face avant (20) vers l'avant dans le sens longitudinal du véhicule, et présente, au moins dans la position d'habillage (V1), une zone de bord inférieure (R) dans le sens de la hauteur du véhicule et une zone d'habillage (V) reliée à la zone de bord inférieure (R) vers le haut dans le sens de la hauteur du véhicule, dans laquelle l'élément d'habillage (16) peut être déplacé de la position d'habillage (V1) à la position de rangement (V2) de telle sorte qu'en faisant pivoter au moins la zone d'habillage (V) vers l'avant dans le sens longitudinal du véhicule et vers le bas dans le sens de la hauteur du véhicule, la zone de bordure inférieure (R) peut être introduite vers l'arrière dans le sens longitudinal du véhicule dans un espace de réception (22) correspondant,
**caractérisée par**
un élément formant barre transversale (26) supérieur qui peut être déplacé entre une position d'appui (A), dans laquelle au moins une partie (T) de la zone de face avant (20) est recouverte vers l'avant dans le sens longitudinal du véhicule par l'élément formant barre transversale (26) et l'élément formant barre transversale (26) est recouvert vers l'arrière dans le sens longitudinal du véhicule par une structure brute de la voiture de tourisme, et au moins une position d'accès (Z) libérant au moins la partie (T) vers l'avant dans le sens longitudinal du véhicule, position d'accès dans laquelle l'élément formant barre transversale (26) est disposé plus bas dans le sens vertical du véhicule par rapport à la position d'appui (A).

2. Face avant (10) selon la revendication 1,
**caractérisée en ce que**
l'élément formant barre transversale (26), dans la position d'accès (Z), est disposé sans être recouvert par la structure brute, vu vers l'arrière dans le sens longitudinal du véhicule.

3. Face avant (10) selon la revendication 1 ou 2,
**caractérisée en ce que**
la structure brute est un plan de longeron supérieur.

4. Face avant (10) selon l'une des revendications précédentes,
**caractérisée en ce que**
la structure brute est disposée, dans le sens de la hauteur du véhicule, au-dessus d'un plan de longeron principal de la voiture de tourisme au niveau duquel plan de longeron principal est reliée une barre transversale de flexion (30) côté avant.

5. Face avant (10) selon l'une des revendications précédentes,
**caractérisée en ce que**
l'élément d'habillage (16) et l'élément formant barre transversale (26) peuvent être déplacés indépendamment l'un de l'autre.

6. Face avant (10) selon l'une des revendications 2 à 4,
**caractérisée en ce que**
l'élément d'habillage (16) et l'élément formant barre transversale (26) sont accouplés l'un à l'autre et peuvent ainsi être déplacés ensemble.

7. Face avant (10) selon l'une des revendications précédentes,
**caractérisée par**
un espace de rangement frontal (24), dans laquelle :
- la zone de face avant (20) est disposée, dans le sens de la hauteur du véhicule, au moins au-dessus d'une zone partielle (25) de l'espace de rangement (24) ; et/ou
- la zone de face avant (20) est au moins une partie de l'espace de rangement (24).

8. Face avant (10) selon la revendication 7,
**caractérisée par**
une porte frontale (42) qui peut être déplacée entre une position de fermeture (ST) recouvrant au moins partiellement l'espace de rangement (24) vers le haut dans le sens de la hauteur du véhicule et au moins une position d'ouverture (OT) libérant au moins partiellement l'espace de rangement (24) vers le haut dans le sens de la hauteur du véhicule.

9. Voiture de tourisme, comportant une face avant (10) selon l'une des revendications précédentes.
